# EUROPEAN PATENT SPECIFICATION

(11) **EP 2 519 989 B1**
(45) Date of publication and mention of the grant of the patent: **06.09.2017**
(21) Application number: 10840247.0
(22) Date of filing: 23.12.2010
(51) Int. Cl.: H01M 8/24, H01M 4/88, H01M 8/00, H01M 8/02, H01M 8/10

(54) **PERFORMANCE ENHANCING LAYERS FOR FUEL CELLS**
LEISTUNGSVERSTÄRKENDE SCHICHTEN FÜR BRENNSTOFFZELLEN
COUCHES AMÉLIORANT LE RENDEMENT DE PILES À COMBUSTIBLE

(30) Priority: 28.12.2009 US 290444 P
(43) Date of publication of application: 07.11.2012
(73) Proprietor: Intelligent Energy Limited, Leicestershire LE11 3GB (GB)
(72) Inventor: HOU, Guoyan, Delta British Colombia V4E 3G2 (CA); SCHROOTEN, Jeremy, Mission British Columbia V2V 7P9 (CA); MCLEAN, Gerard F., West Vancouver British Columbia V7V 1N3 (CA); SAWADA, James Alexander, Edmonton Alberta T6G 0B9 (CA); WANG, Tao, Burnaby British Columbia V5E 3R8 (CA)
(74) Representative: Ahmad, Sheikh Shakeel
(86) International application number: PCT/CA2010/002026
(87) International publication number: WO 2011/079378

(56) References cited:
- CA-A1- 2 714 991
- US-A- 5 861 221
- US-A1- 2002 168 526
- US-A1- 2002 168 526
- US-A1- 2009 130 527
- US-A1- 2009 130 527
- US-A1- 2009 151 847
- US-A1- 2009 162 722

## Description

### BACKGROUND

Fuel cells may be employed as a power supply for an increasing number of large-scale applications, such as materials handling (e.g. forklifts), transportation (e.g. electric and hybrid vehicles) and off-grid power supply (e.g. for emergency power supply or telecommunications). Smaller fuel cells are now being developed for portable consumer applications, such as notebook computers, cellular telephones, personal digital assistants (PDAs), and the like.

Fuel cells may be connected in the form of a conventional fuel cell stack. Many conventional fuel cell stacks employ gas diffusion layers (GDLs) for collecting current from a catalyst layer (e.g. an anode) in one unit cell and transmitting it (e.g. through a bipolar plate) to the opposite catalyst layer (e.g. a cathode) of the next unit cell. In many conventional fuel cell stacks, the predominant direction of current flow is perpendicular to the plane of the fuel cell and the GDL.

Fuel cells may also be connected in edge-collected configurations, such as planar configurations. In such embodiments, the predominant direction of electron flow may be different from the predominant direction of electron flow in a conventional fuel cell stack. GDLs used with conventional fuel cell stacks may not be optimal for use with edge-collected fuel cell systems.

US2009/130527 (A1) discloses that the performance of solid polymer electrolyte fuel cells having planar architecture is improved by increasing the electrical conductivity in at least one of the catalyst layers. The conductivity is increased by incorporating a highly electrically conductive additive selected from the group consisting of graphite, carbon nanotubes, and corrosion tolerant metals.

US2002/168526 (A1) relates to a graphite article having predetermined anisotropic characteristics, as well as a process for preparing the article. More particularly, the article is prepared by a process involving determining the desired anisotropic characteristics for a finished flexible graphite article; intercalating and then exfoliating flakes of graphite to form exfoliated graphite particles; forming a substrate graphite article by compressing the exfoliated graphite particles into a coherent article formed of graphene layers; and producing a controlled directional alignment of the graphene layers in the substrate graphite article to provide a finished graphite article having the desired anisotropic ratio.

### SUMMARY

The invention is defined by the claims.

### BRIEF DESCRIPTION OF THE DRAWINGS

The accompanying drawings illustrate non-limiting example embodiments of the invention. In the drawings, like numerals describe components that are similar, but not necessarily the same. Like numerals having different letter suffixes represent different instances of components that are similar but not necessarily the same.
Figure 1 is a cross-sectional schematic diagram of a conventional prior art fuel cell stack.
Figure 1A is an enlarged schematic view of a prior art unit fuel cell of the conventional fuel cell stack of Figure 1.
Figure 2A is a cross-sectional view of a first example planar fuel cell layer.
Figure 2B is a cross-sectional view of a second example planar fuel cell layer.
Figure 3 is a cross-sectional schematic diagram of an example unit fuel cell in the example planar fuel cell layer of Figure 2.
Figure 4A is a cross-sectional view of an example planar fuel cell layer with performance enhancing layers (PELs), according to an example embodiment.
Figure 4B is a cross-sectional view of an example planar fuel cell layer having PELs, according to a second example embodiment.
Figure 4C is a cross-sectional view of an example planar fuel cell layer having PELs, according to a third example embodiment.
Figure 5A is a cross-sectional schematic diagram of the electron flow in an example planar fuel cell.
Figure 5B is a cross-sectional schematic diagram of the electron flow in an example planar fuel cell having PELs, according to an example embodiment.
Figure 6 is a cross-sectional view of an example planar fuel cell layer having PELs, according to a fourth example embodiment.
Figure 7 is a block process diagram of a method of preparing a fuel cell layer having PELs, according to an example embodiment.
Figure 8 is a graph of the performance of a fuel cell layer without PELs and a fuel cell layer with PELs, prepared according to an example embodiment.
Figure 9 is a top view of a fuel cell layer having PELs, according to an example embodiment.
Figure 10 is a plot of resistivity versus angle and conductivity versus angle for coupons cut from a PEL film, which was prepared according to a particular example embodiment.

### DETAILED DESCRIPTION

Throughout the following description, specific details are set forth in order to provide a more thorough understanding of the invention. However, the invention may be practiced without these particulars. In other instances, well known elements have not been shown or described in detail in order to avoid unnecessarily obscuring the invention. The drawings show, by way of illustration, specific embodiments in which the invention may be practiced. These embodiments may be combined, other elements may be utilized or structural or logical changes may be made without departing from the scope of the invention. Accordingly, the specification and drawings are to be regarded in an illustrative, rather than a restrictive, sense.

All publications, patents and patent documents referred to in this document are incorporated by reference herein in their entirety, as though individually incorporated by reference. In the event of inconsistent usages between this document and those documents so incorporated by reference, the usage in the incorporated references should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more". In this document, the term "or" is used to refer to a nonexclusive or, such that "A, B or C" includes "A only", "B only", "C only", "A and B", "B and C", "A and C", and "A, B and C", unless otherwise indicated.

In the appended aspects and claims, the terms "first", "second" and "third", etc. are used merely as labels, and are not intended to impose numerical requirements on their objects.

Provided herein, are performance enhancing layers (PELs) for edge-collected fuel cells. A PEL provides a pathway for current to flow from an electrode coating in one unit cell to a current collector (or electron conducting component) to the opposite electrode coating of the next unit cell. PELs may possess anisotropic conductivity. PELs include an electrically conductive material having particles. The particles may be morphologically anisotropic and may be oriented to impart high in-plane conductivity in the performance enhancing layer. Also provided herein are methods of preparing PELs and fuel cell layers including PELs.

Embodiments of the invention have been described as proton exchange membrane (PEM) fuel cells or components of PEM fuel cells. However, embodiments may be practiced with other types of fuel cells, such as alkaline fuel cells or solid oxide fuel cells. Embodiments may also have application in other types of electrochemical cells, such as electrolyzers or chlor-alkali cells.

Fuel cell systems according to some embodiments may be used as a source of power for various applications. For example, fuel cell systems may be used to power portable consumer devices, such as notebook computers, cellular telephones or PDAs. However, the invention is not restricted to portable consumer devices and embodiments may be practiced to power larger applications, such as materials handling applications, transportation applications or off-grid power generation; or other smaller applications.

Embodiments of the invention may be practiced with fuel cells of a variety of different designs. Described herein is the practice of embodiments with planar fuel cells. However, the same or other embodiments may alternatively be practiced with other edge-collected fuel cells. For ease of reference, throughout the description, edge-collected fuel cells and related technology are referred to as "planar" fuel cells, "planar" fuel cell systems or "planar" fuel cell layers. However, it is to be understood that in some embodiments, edge-collected fuel cells may not be planar and edge-collected fuel cells need not be planar to be practiced with the invention. For example, unit fuel cells may not all lie in the same plane (e.g. they may be flexible, spiral, tubular, or undulating) or may generally lie in the same plane but have non-planar microdimensions.

### Definitions

As used herein, a "composite layer" or "composite" refers to a layer including at least two surfaces having a thickness, where one or more ion conducting passages and one or more electrically conductive passages are defined between the surfaces. Ion conducting properties and electrically conductive properties of a composite may be varied in different regions of the composite by defining ion conducting passageways and electrically conductive passageways with varying sizes, shapes, densities or arrangements. A composite layer may include one or more interface regions. A composite layer may be impermeable to a fluid (e.g. a gas or a liquid). In some embodiments, the composite layer may be substantially impermeable to some fluids, but permeable to others. For example, the composite layer may be substantially impermeable to a gas pressure imparted by a fuel; however, water may be able to migrate across the ion conducting components.

As used herein, an "electron conducting component" refers to a component of a composite layer that provides an electrically conductive pathway. The electron conducting component may provide an electrically conductive pathway, or pathways, from one surface of a composite layer, through the composite, to the opposite surface of the composite layer, for example.. Electron conducting components include one or more materials that are electrically conductive, for example, metals, metal foams, carbonaceous materials, electrically conductive ceramics, electrically conductive polymers, combinations thereof, and the like. Electron conducting components may also include materials that are not electrically conductive.

As used herein, an "ion conducting component" refers to a component that provides an ion conducting passageway. Ion conducting components may be components of a composite layer. Ion conducting components include an ion conducting material, such as a fluoropolymer-based ion conducting material or a hydrocarbon-based conducting material.

As used herein, an "interface region" refers to a component of a composite layer that is not electrically conductive. An interface region may include a material which exhibits negligible ionic conductivity and negligible electrical conductivity, for example. Interface regions may be used in conjunction with electron conducting regions to form current collectors, and in such cases may be disposed adjacent electron conducting regions on one or both sides of the electron conducting region. Electron conducting regions may be embedded in an interface region to form a current collector. It is to be understood that an interface region (or interface regions) is an optional component in a current collector, not a necessary component. When used as a component of a current collector, an interface region may be used to promote adhesion between electron conducting regions and ion conducting components, and/or may be used to provide electrical insulation between adjacent electrochemical cells.

As used herein, a "particle" refers to a portion, piece or fragment of a material. For example, electrically conducting particles may include fibers, flakes, fragments or discrete portions of an electrochemical layer.

As used herein, "plane" refers to a two-dimensional hypothetical surface having a determinate extension and spatial direction or position. For example, a rectangular block may have a vertical plane and two horizontal planes, orthogonal to one another. Planes may be defined relative to one another using angles greater or less than 90 degrees, for example.

As used herein, "fuel," refers to any material suitable for use as a fuel in a fuel cell. Examples of fuel may include, but are not limited to hydrogen, methanol, ethanol, butane, borohydride compounds such as sodium or potassium borohydride, formic acid, ammonia and ammonia derivatives such as amines and hydrazine, complex metal hydride compounds such as aluminum borohydride, boranes such as diborane, hydrocarbons such as cyclohexane, carbazoles such as dodecahydro-n-ethyl carbazole, and other saturated cyclic, polycyclic hydrocarbons, saturated amino boranes such as cyclotriborazane.

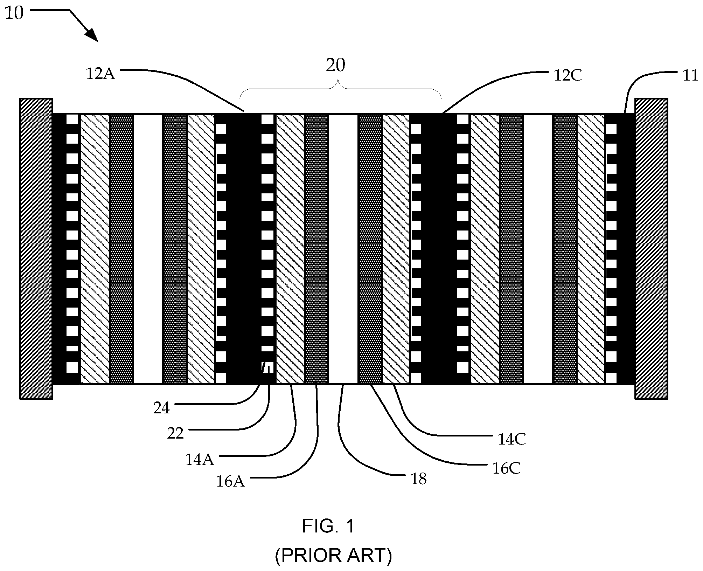

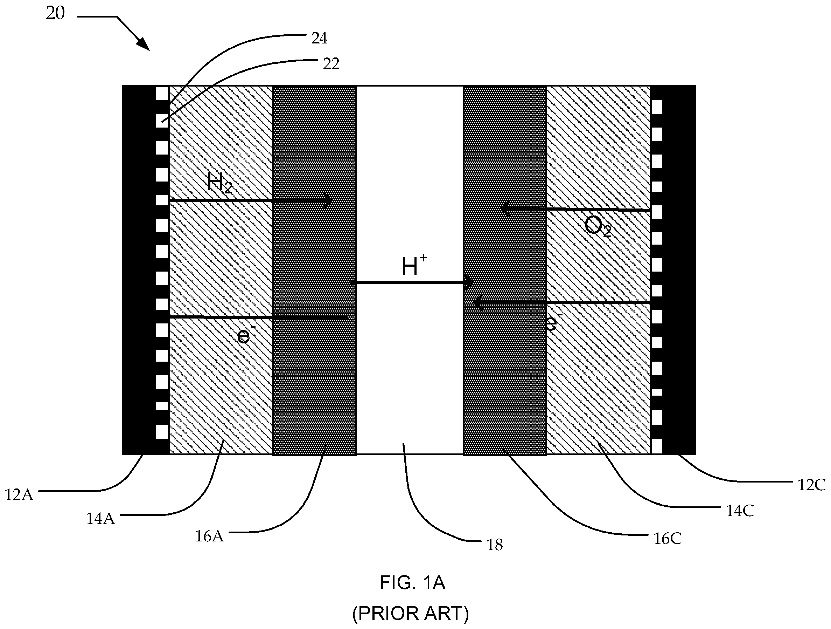

A conventional prior art fuel cell stack 10 is shown in figure 1. Fuel cell stack 10 has individual fuel cells 20, which may be arranged in series. Fuel cells 20 may, for example, include proton exchange membrane (PEM) fuel cells. Fuel cell stack 10 has manifolds (not shown) into which is introduced a fuel, such as hydrogen gas and an oxidant, such as air or oxygen.

Fuel and oxidant travel to unit fuel cells 20 via unipolar plates 11 and bipolar plates 12 having flow channels 22 and landings 24. Fuel passes from flow channels 22 in bipolar plate 12A through a porous current-carrying layer or gas diffusion layer (GDL) 14A into an anode catalyst layer 16A. At anode catalyst layer 16A, the fuel undergoes a chemical reaction to produce free electrons and positively charged ions (typically protons). The free electrons are collected by GDL 14A and pass through bipolar plate 12A into GDL 14C of the next unit fuel cell. The ions travel in the opposite direction, through an electrically-insulating ion exchange membrane 18. Ion exchange membrane 18 lies between anode catalyst layer 16A and cathode catalyst layer 16C.

Figure 1A is a cross-sectional schematic diagram of unit fuel cell 20 of the conventional fuel cell stack 10 of figure 1. In fuel cell 20, electrons travel from the sites of chemical reactions in anode catalyst layer 16A to GDL 14A. Protons (or other positively charged ions) travel into and through ion exchange membrane 18 in a direction opposite to the direction of electron flow. Electrons collected in GDL 14A travel through landings 24 of bipolar plate 12A to the GDL 14C of the next unit cell. In such fuel cells, electron flow and ion flow occur in generally opposite directions, and are both substantially perpendicular to the plane of ion exchange membrane 18, GDLs 14 and catalyst layers 16.

At catalyst layer 16C, protons and negatively-charged oxygen ions combine to form water. The product water either remains in GDL 14C, is absorbed by ion exchange membrane 18, travels to flow channels 22 of bipolar plate 12C, or a combinations of these.

Since GDLs 14 conduct electrons from the bipolar plate to a catalyst layer and vice versa, GDLs 14 often require high in-plane conductivity - e.g. electrically conductive in directions that are perpendicular to the plane of the fuel cell and GDL.

Typically, compressive force is applied to a fuel cell stack to prevent leakage of fuel and oxidant and to reduce contact resistance between the catalyst layers, GDLs, and bipolar plates. In particular, many fuel cell stacks require compressive force in order to achieve good electrical contact between GDLs and bipolar plates. Fuel cell stacks therefore require many parts (e.g. clamps) and assembly may be quite complex.

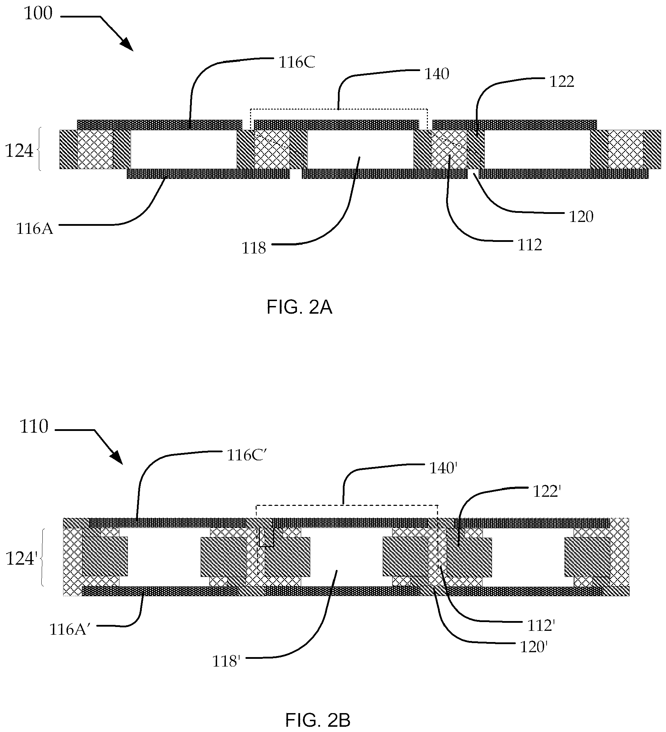

Figures 2A and 2B show cross sectional views of a first example planar fuel cell layer 100 and a second example planar fuel cell 110, as described in co-assigned United States Patent Application No. 11/047,560 and Patent Cooperation Treaty application No. CA2009/000253, respectively entitled ELECTROCHEMICAL CELLS HAVING CURRENT-CARRYING STRUCTURES UNDERLYING ELECTROCHEMICAL REACTION LAYERS and ELECTROCHEMICAL CELL AND MEMBRANES RELATED THERETO. Example planar fuel cell layers 100, 110 include a composite layer 124, 124' having ion conducting components 118, 118' and electron conducting components 112, 112'. Optionally, composite 124, 124' may also have interface or substrate regions 122, 122'. Interface or substrate regions 122, 122' may include a material that is electrically and ionically insulating. Fuel cell layers 100, 110 have two types of electrode coatings, namely cathode coatings 116C, 116C' and anode coatings 116A, 116A'. Cathode coatings 116C, 116C' are disposed on a first side of composite 124, 124' and are adhered to a first surface of composite 124, 124'. Anode coatings 116A, 116A' are disposed on a second side of composite 124, 124' and are adhered to a second surface of composite 124, 124'. Cathode coatings 116C, 116'C and anode coatings 116A, 116A' are each separated from each other by gaps or dielectric regions 120, 120'.

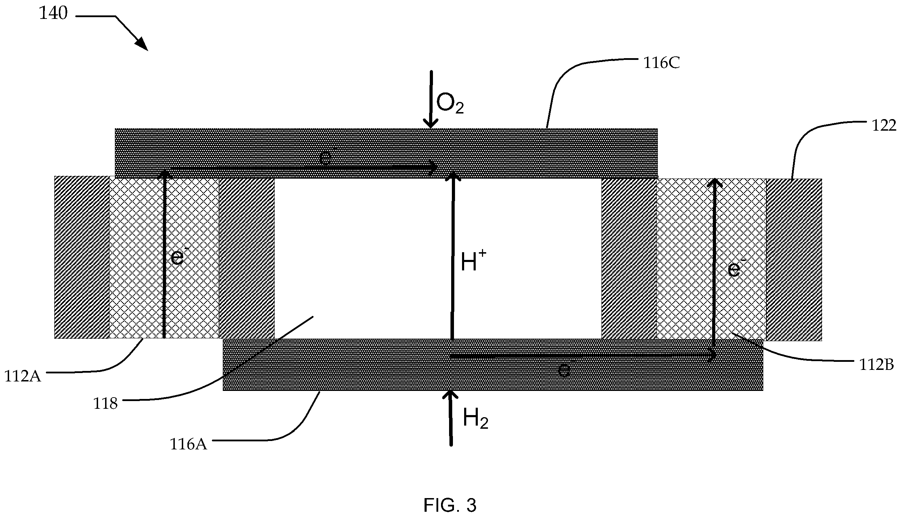

Figure 3 is a cross-sectional schematic diagram of unit fuel cell 140 in the example planar fuel cell layer 100. In the embodiment shown, the fuel and oxidant are respectively, hydrogen and oxygen. However, it is to be understood that embodiments of the invention may be used with fuel cells utilizing other combinations of fuel and oxidant. Hydrogen contacts anode coating 116A and is dissociated into protons and electrons. Electrons travel through anode coating 116A in a direction that is predominantly parallel to the plane of anode coating 116A and into and through electron conducting component 112b, which is shared with the next unit cell. Protons travel from the sites of chemical reaction within anode coating 116A in a direction that is substantially orthogonal to the direction of electron travel through anode coating 116A. Electrons collected in electron conducting component 112b travel to the cathode coating of the next unit cell. Electrons travel from electron conducting component 112a through the cathode coating in a direction that is predominantly parallel to the plane of cathode coating 116C. Oxygen contacts cathode coating 116C and travels to the sites of chemical reaction. Oxygen is reduced and product water is produced, which may either exit or remain in cathode coating 116C.

With some edge-collected fuel cell layers, it may be desirable to have electrode coatings or other layers with good electrical conductivity in a direction that is parallel to the plane of the coating (e.g. as opposed to perpendicular to the plane of the coating, as with many conventional fuel cells). Some edge-collected fuel cell layers utilize very small individual fuel cells to reduce the distance traveled by the electrical current, thus minimizing ohmic losses. Electrode coatings of some edge-collected fuel cells have catalyst loadings that are greater than what is required for electrochemical activity. In such edge-collected fuel cells, the catalyst may be used to conduct current as well as to catalyze the electrochemical reactions. In some edge-collected fuel cell layers, electrode coatings may exhibit cracking, which may increase electrical resistance in the plane of the coating. Electrode coatings of some edge-collected fuel cells employ highly conductive materials to increase the electrical conductivity in the electrode coatings. Embodiments of the present invention describe fuel cell layers utilizing electrical pathways exhibiting good conductivity that are parallel to the plane of the electrode coatings.

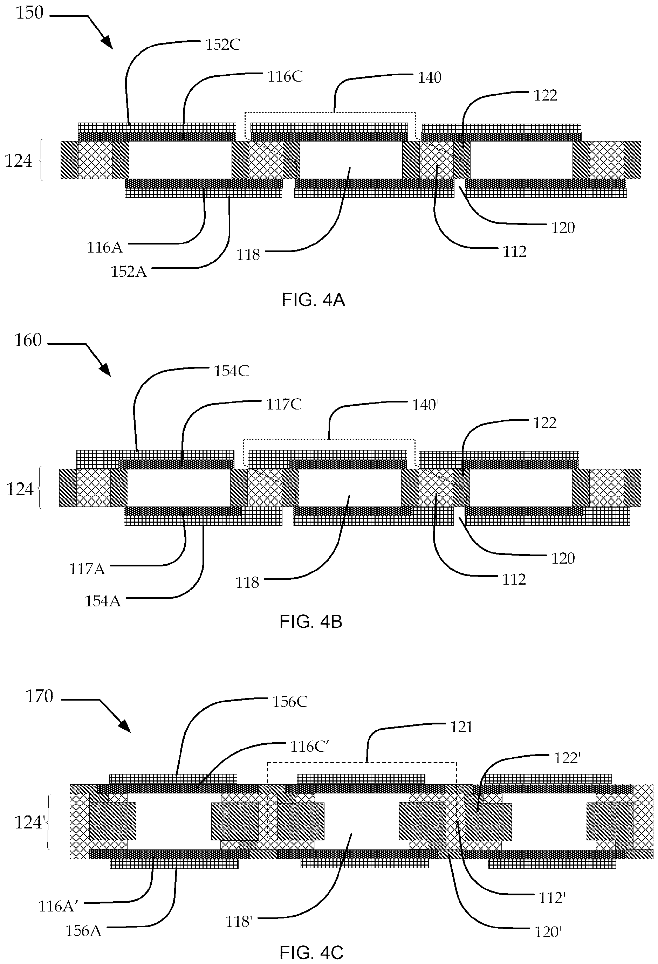

Figure 4A is a cross-sectional view of a planar fuel cell layer with a performance enhancing layer, according to an example embodiment. Planar fuel cell layer 150 includes a composite layer 124 having ion conducting components 118 and electron conducting components 112. Optionally, composite 124 may also have interface regions 122. Cathode coatings 116C are disposed on a first side of composite 124 and are adhered to a first surface of composite 124. Anode coatings 116A are disposed on a second side of composite 124 and are adhered to a second surface of composite 124. Cathode coatings 116C and anode coatings 116A are each separated from each other by gaps or dielectric regions 120.

Planar fuel cell layer 150 has one or more unit fuel cells 140. As can be seen, when assembled as a fuel cell layer, in a unit cell, a cathode coating is disposed on a first surface of the associated ion conducting component and is substantially coextensive with the ion conducting component. An anode coating is disposed on a second surface of the associated ion conducting component and is substantially coextensive with the ion conducting component. Both the cathode coating and anode coating are in ionic contact with the ion conducting component and in electrical contact with one of the electron conducting components. The cathode coating of a unit cell extends substantially over a first electron conducting component and the anode coating extends substantially over a second electron conducting component. In the example shown, unit cells are connected in series. However, unit cells may alternatively be connected in parallel or in series-parallel combinations.

Planar fuel cell layer 150 has performance enhancing layers (PELs) 152C and 152A. Cathode PEL 152C is disposed on the outer side of cathode coating 116C and is adhered to the outer surface of cathode coating 116C. Anode PEL 152A is disposed on the outer side of anode coating 116A and is adhered to the outer surface of anode coating 116A. Cathode PELs 152C and anode PELs 152A are each separated from each other by gaps or dielectric regions 120. Throughout this description, the terms "outer" and "inner" are respectively used to refer to directions further and closer from the center of the composite or ion conducting component. While ion conducting components are shown as being rectangular for ease of illustration, it is understood and contemplated by the inventors that in some embodiments the ion conducting components may be irregularly shaped, may have concave or convex surfaces, or may be disposed asymmetrically relative to the middle of the fuel cell layer.

Throughout this description, the term "performance enhancing" layer is used. However, it is to be understood that performance enhancing layers need not improve the electrical performance of a fuel cell layer. A fuel cell layer including a PEL may exhibit one or more of the following performance improvements over a fuel cell layer without a PEL: improved electrical performance; lower cost; greater ease of manufacture; lower degradation rate (improved lifetime performance), reduce performance fluctuations or satisfactory performance over a larger range of environmental conditions; and improved tolerance to environmental contaminants (such as nitrous oxides, sulfur oxides, carbon oxides and the like).

PELs may augment the electrical pathway between a reaction site in an electrode coating and the associated electron conducting component. Fuel cell layers with PELs may have thinner electrode coatings and therefore, reduced catalyst loadings which may make them more cost-efficient. Fuel cell layers with PELs may have reduced electrical resistivity and therefore, may exhibit better performance than fuel cell layers without PELs.

In the embodiment shown, cathode PEL 152C and anode PEL 152A are each substantially co-extensive with respectively, cathode coating 116C and anode coating 116A. However, cathode PEL 152C and anode PEL 152A need not be co-extensive with the associated electrode coating. In some embodiments, the PEL does not extend over the entire electrode area and has a surface area that is less than the surface area of the associated electrode coating. In other embodiments, PEL extends over the entire electrode area and has a surface area that is greater than the surface area of the associated electrode coating.

Figure 4B is a cross-sectional view of an example planar fuel cell layer having PELs, according to a second example embodiment. Planar fuel cell layer 160 has cathode coatings 117C and anode coatings 117A. In the embodiment shown, cathode coatings 117C and anode coatings 117A each are substantially co-extensive with the associated ion conducting component 118 and have little or no direct physical contact with the associated electron conducting component 112. Planar fuel cell layer 160 has cathode PELs 154C and anode PELs 154A. In the embodiment shown, cathode PELs 154C and anode PELs 154A each extend over substantially all of the outer surface of the associated electrode coating 117 and substantially all of the outer surface of the associated electron conducting component 112. Cathode PEL 154C provides an electrical connection between cathode coating 117C and the associated electron conducting component 112. Anode PEL 154A provides an electrical connection between anode coating 117A and the associated electron conducting component 112.

With PELs of the illustrated embodiment, fuel cell layer 160 may have electrode coatings with reduced thickness or area, and therefore reduced catalyst loadings. Accordingly, the PELs of the illustrated embodiment may allow for more cost efficient preparation of planar fuel cell layers. Additionally or alternatively, fuel cell layers with PELs may have reduced electrical resistivity and therefore, greater performance. Preparation methods for fuel cell layers having PELs may require less precision than fuel cell layers without PELs, since catalyst need not cover the electron conducting components of the fuel cell layer.

Figure 4C is a cross-sectional view of an example planar fuel cell layer with PELs, according to a third example embodiment. Fuel cell layer 170 has cathode coatings 116C' and anode coatings 116A' . In the embodiment shown, cathode coatings 116C' and anode coatings 116A' each extend over the outer surface of the associated ion conducting component 118' and over at least part of the associated electron conducting component 112'. Fuel cell layer has cathode PELs 156C and anode PELs 156A. Cathode PELs 156C and anode PELs 156A each extend over a portion of the associated electrode coating 116'. In the embodiment shown, PELs 156 have a surface area that is smaller than the surface area of the associated electrode coating 116'. Fuel cell layers with PELs of the illustrated embodiment may allow for simpler electrical isolation of individual electrode coatings than fuel cell layers without PELs. Accordingly, fuel cell layers with PELs 156 may be simpler to prepare.

PELs may include a variety of materials and in a fuel cell layer, may serve one or more of a variety of different functions or purposes. PELs may reduce cost by allowing for electrode coatings with reduced catalyst loadings. Additionally or alternatively, PELs may improve electrical conductivity within unit cells, thereby reducing ohmic losses in a fuel cell layer.

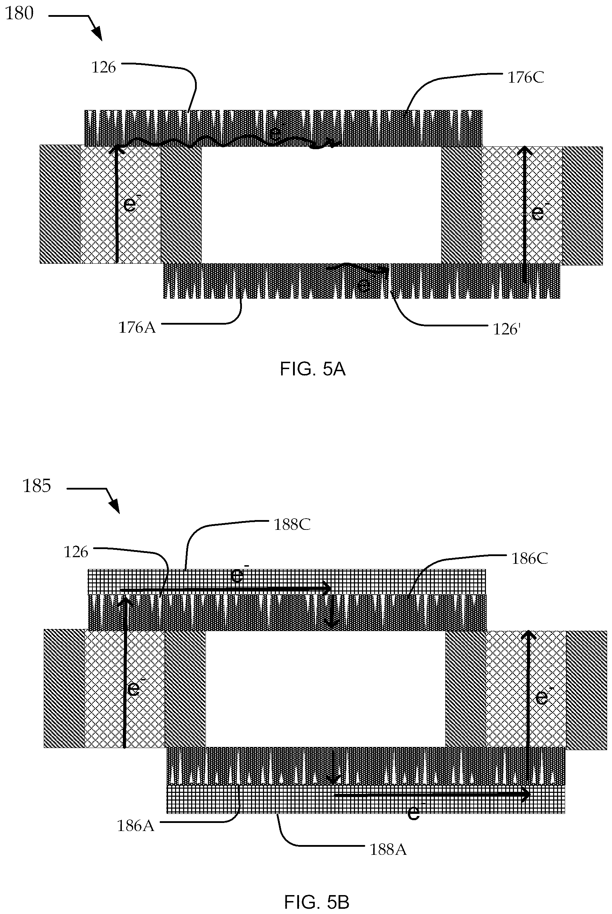

PELs may improve electrical conductivity in a number of different ways. For example, a PEL may provide a bridge between cracks in an electrode coating. Figures 5A and 5B are cross-sectional schematic diagrams of respectively, a unit fuel cell 180 of an example planar fuel cell without PELs and a unit cell 185 of an example planar fuel cell with PELs, according to an example embodiment. Fuel cells 180,185 each have a cathode coating 176C, 186C and an anode coating 176A, 186A. Cathode coatings 176C, 186C and anode coatings 176A, 186A each have cracks 126. Fuel cell 185 has a cathode PEL 188C and an anode PEL 188A.

In fuel cells 180, 185 an electron from the previous unit cell travels through the electron conducting component into cathode coating 176C, 186C. In cathode coating 176C of fuel cell 180, the electron takes a tortuous path to arrive at the reaction site. In anode coating 176A, the electron also takes a tortuous path from the reaction site towards the electron conducting component. However, since crack 126' extends throughout the entire thickness of anode coating 176A, the electron cannot reach the electron conducting component and fuel cell 180 fails.

In cathode coating 186C of fuel cell 185, the electron arrives at the reaction site by travelling through the thickness of cathode coating 186C, through PEL 188C in a direction that is parallel to the plane of PEL 188C and then again through the thickness of catalyst coating 186C. On the anode side, the electron takes a similar path. In an example planar fuel cell with cracked electrode coatings, a PEL may improve conductivity by providing a bridge over cracks in electrode coatings. In such fuel cells or in fuel cells with electrodes having reduced catalyst loadings, PELs may reduce voltage loss by providing an additional electrically conductive pathway.

PELs are electrically conductive and in many embodiments, PELs have high in-plane electrical conductivity. In some embodiments, PELs are electrically anisotropic - e.g. they exhibit electrical conductivity that is greater in one or more directions than in one or more other directions. In some embodiments PELs have an electrical conductivity that is greater in one or more directions in the plane of the PEL than the electrical conductivity in directions that are perpendicular to the plane of the PEL. In some example embodiments, PELs have greater electrical conductivity in a first direction that is in the plane of the PEL than the electrical conductivity in both: a second direction that is perpendicular to the plane of the PEL; and, a third direction that is in the plane of the PEL. The third direction may be orthogonal to the first direction or it may be oriented at another angle from the first direction. In a particular example embodiment, PELs have an electrical conductivity that is greatest in the directions that extend: from one electron conducting component towards the next electron conducting component; and, vice versa.

PELs may include a variety of electrically conductive materials. PELs may include one or more electrically conductive materials that are also corrosion resistant. For example, PELs may include carbon, such as carbon black, graphite, carbon fibers, carbon foams, carbon flakes, carbon nanotubes, carbon needles and amorphous carbon. PELs may additionally or alternatively include other electrically conductive materials, such as noble metals, corrosion-resistant metals or metal alloys, and conducting polymers (e.g. polyaniline).

Electrically conductive materials may include discrete particles or portions of the PEL layer, such as fragments, flakes or fibers. In some embodiments, electrically conductive materials include particles that are morphologically anisotropic. For example, electrically conductive materials may include morphologically anisotropic carbon particles, such as carbon fibers. Electrically conductive materials may include carbon fibers that are short (e.g.. fibers with an average length that are an order of magnitude less than the length of a unit fuel cell) or fibers that are long (e.g. fibers with an average length in the same order of magnitude of the length of a unit fuel cell). In an example embodiment, fibers are shorter than the thickness of the ion conducting components. Such an embodiment may avoid the occurrence of electrical shorts caused by fiber penetration into the ion conducting components.

In some embodiments, anisotropic particles of electrically conductive materials are oriented to impart anisotropy in PELs (e.g. anisotropy in electrical or heat conductivity). In an example embodiment, anisotropic particles are oriented by the application of a shear stress in the direction of preferred orientation. Such an embodiment may be prepared by drawing a slurry including anisotropic particles, the anisotropic particles in the resulting PEL being aligned in the direction of drawing. In other embodiments, PELs take advantage of the anisotropy in an electrically conductive material. In such embodiments, electrically conductive materials may include carbon fibers in the form of woven or non-woven carbon fibers.

In some embodiments, PELs may be strong or rigid or may include strong or rigid materials. In such embodiments, PELs may provide support for ion conducting components. In other embodiments, PELs may be flexible or elastic. In some embodiments, PELs are flexible and may be used with a flexible or conformable fuel cell layer, for example, a fuel cell layer described in co-assigned United States Patent No. 7,474,075 entitled DEVICES POWERED BY CONFORMABLE FUEL CELLS. In an example embodiment, PELs may be elastic when subjected to the stresses or strains present in the normal operating range of a fuel cell.

PELs may have elasticity that is anisotropic - e.g. a PEL may have elasticity that is greater in one or more directions than in one or more other directions. In some embodiments PELs have an elasticity that is greater in one or more directions in the plane of the PEL than the elasticity in directions that are perpendicular to the plane of the PEL. In some example embodiments, PELs have greater elasticity in a first direction that is in the plane of the PEL than the elasticity in both: a second direction that is perpendicular to the plane of the PEL; and, a third direction that is in the plane of the PEL. The third direction may be orthogonal to the first direction or it may be oriented at another angle from the first direction. In a particular example embodiment, PELs have elasticity that is greatest in the directions that extend: from one electron conducting component towards the next electron conducting component; and, vice versa.

In some embodiments, PELs may reduce voltage losses by preventing or lessening the formation of cracks in the electrode coatings. During the normal operation of a fuel cell, the ion conducting components may expand, due to the absorption of water. In such embodiments, PELs may reduce expansion of the ion conducting components or may reduce the stress that such expansion places on the electrode coatings. For example, if the PEL is rigid, or partially rigid, it may reduce deformation of the ion conducting components.

PELs may include a material that acts as a binder or matrix. In some embodiments, the material that acts as a binder or matrix can be a material that facilitates a bond to the catalyst layer. The binder material may function to hold particles of electrically conductive material together, bind electrically conductive materials to electrode coatings, or both. The binder material may have additional functions, such as managing heat or water in the fuel cell layer. The binder material may bond well with electrode coatings, electron conducting components or ion conducting components. The binder material may be chemically inert or resistant to corrosion. The binder material may be deformable, insoluble in water, or stable in the presence of fuel. For example, PELs may include a binder material that is a plastic, such as a thermoplastic or a thermosetting polymer. For example, PELs may include one or more of the following: fluoropolymers, such as polyvinylidene fluoride (PVDF), polytetrafluroethylene (PTFE), and perfluorosulfonic acid (e.g. Nafion^{®} perfluorosulfonic acid from E. I. du Pont de Nemours and Company); non-fluorinated ionomers; non-fluorinated thermoplastics, such as polyethylene and polypropylene; or, polyurethanes.

In some embodiments, the catalyst layer may contain binders that make the catalyst layer more deformable without completely breaking electrical continuity. These binders may also enhance bonding between the catalyst layer and the PELs, and provide for a more robust fuel cell layer. Such binder materials, for example, include plastics or conductive plastics. For example, an ionomer dispersion, such as Nafion, may be used as a binder for the catalyst layer. Other suitable binder materials may include polytetrafluoroethylene (e.g. Teflon), polypropylene, polyethylene or other relatively inert additives that may increase the elasticity of the catalyst layer.

Catalyst layers in planar fuel cells may employ other means of preventing cracking or of preventing the creation of electrical discontinuities across the layer. For example, the catalyst layers may employ micro structures made of conductive material or of a non-conductive structural member coated with conductive material. Such microstructures may be long and thin, with overall dimensions that will not impede the flow surrounding materials, such as reactants and bi-products, and may be referred to as "crack bridging" micro structures. Examples of potential crack bridging micro structures include carbon fibres of various sorts, carbon nanotubes or conductive materials (e.g. platinum, gold) disposed on a plastic or ceramic fibre.

Catalyst layers may also employ "crack pinning" microstructures, where propagation of cracks in the catalyst layer is prevented through the addition of a structural reinforcement within the catalyst layer. Such microstructures may or may not be electrically conductive. Examples of crack pinning micro structures may include, for example, inert materials that will not contaminate the ion conducting components or catalyst and may be relatively inelastic, such as plastics, ceramics or certain organic materials.

Use of PELs in fuel cell layers may allow for reduction in catalyst loading; such reduction may also provide a more ductile catalyst layer that is less susceptible to cracking. Catalyst layers may further employ any number of additives, such as carbon supported platinum, gold, carbon or graphite to enhance catalyst layer durability, and, in some cases, may also promote bonding of the PEL to the fuel cell layer and electrical conductivity within the layers.

In some embodiments, PELs may have properties that allow them to readily bond with electrode coatings, electron conducting components or optionally, ion conducting components. Accordingly, such PELs may not require compressive force in order to maintain good electrical contact with electron conducting components and electrode coatings. Fuel cell systems incorporating such PELs may be simpler to assemble.

In some such embodiments, the PELs may be bonded to the fuel cell layer, or the electrode coating(s) of the fuel cell layer using heat, and/or pressure, or using any other suitable means of bonding the PEL.

In other embodiments, the PELs may not be bonded to the fuel cell and as such require the fuel cell cover or other structural feature to exert a force on a conductive layer to maintain contact with the fuel cell. In some examples, the installation of multiple discrete pieces into the structure can advantageously eliminate bonding requirements and requirements to form gaps in the PEI. In one example embodiment, the fuel cell layer may be asymmetric in nature, such that one side of the ion conducting components may be generally concave in profile. In such embodiments, the voids formed by the concave portions of the ion conducting components relative to the plane of the surface of the current collectors may be filled or supported with a porous conductive material such as a carbon textile, carbon powder, corrosion resistant metal textile, corrosion resistant metal powder, graphite powder, or PEL. In such embodiments, an external support structure may press the porous inserts into the catalyst layers, enhancing electrical contact and allowing current to flow into and through the porous structures to enable low resistance current paths even in the presence of catalyst cracks. Other mechanical and chemical properties of a porous conductive material inserted into concave regions of the fuel cell may be chosen to best affect the fuel cell functions: for example, the PEL may be a compressible layer and may have water retention properties suitable for aiding water management. In such embodiments, a support structure may be bonded to the fuel cell layer (e.g. at the current collectors) and/or the PELs to promote structural support.

In some embodiments, PELs may be activated or primed prior to bonding with fuel cell layers. In example embodiments, PELs are activated or primed to improve bonding or adhesion with electrode coatings or to reduce contact resistance between PELs and electrode coatings.

In some embodiments, cathode and anode PELs may be sufficiently porous to allow for the mass transport of oxidant or fuel, respectively. In some embodiments, PELs may be designed to improve water or heat management. For example, the porosity of PELs may be engineered for a degree of water or heat retention. Properties such as porosity, hydrophobicity and thermal conductivity may be varied in the different layers (e.g. cathode coating, anode coating, cathode PEL and anode PEL) to enhance water or heat management. PELs may include materials that affect hydrophobicity or hydrophilicity of the PEL, such as ionomers (e.g. perflurosulfonic acid, polyarylene sulfonic acid, and a copolymer of styrene and divinylbenzene), PTFE, nylon, oxides (e.g. silica, tin oxide) or the like.

In an example embodiment, PELs have a thickness of less than about 1 mm. The thickness may be between about 35 µm to about 750 µm, about 50 µm and about 500 µm, or between about 100 µm and about 350 µm, for example. In some example embodiments, PELs may have a thickness in the range of about 50 µm to about 200µm.

In some embodiments, PELs are disposed on one or more surfaces of the composite layer adjacent to the inner surface of the anode coatings or the cathode coatings.

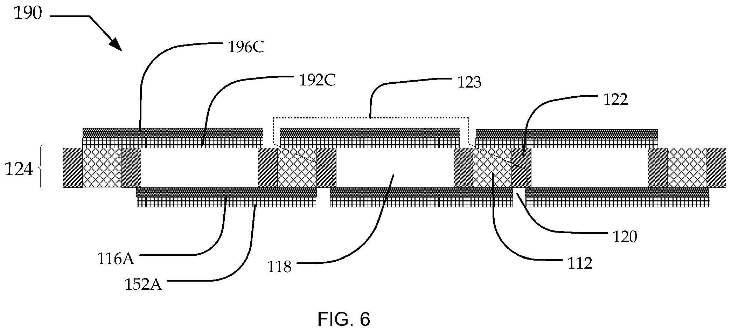

Figure 6 is a cross-sectional view of an example planar fuel cell layer 190 having PELs, according to an example embodiment. Fuel cell layer 190 has anode coatings 116A, cathode coatings 196C, anode PELs 152A and cathode PELs 192C. The position of cathode coatings 196C and cathode PELs 192C are reversed with respect to the position of anode coatings 116A and anode PELs 152A and the electrode coatings and PELs of the embodiments described above. Cathode PELs 192C are disposed on a first side of composite 124 and are adhered to a first surface of composite 124.

Within a unit fuel cell, a cathode coating 196C is disposed on the outer side of cathode PEL 192C and is adhered to the outer surface of cathode PEL 192C. During operation of the fuel cell, protons (or other ions) travel from the reaction site in anode coating 116A, through ion conducting component 118, through cathode PEL 192C, to the reaction site in cathode coating 196C. Electrons travel from electron conducting components 112, through cathode PEL 192C, to the reaction site in cathode coating 196C. Oxidant travels through to cathode coating 196C and is reduced at the reaction site.

Cathode PELs 192C may have different properties or may include different materials than the PELs of the embodiments described above. Since cathode PELs 192C are disposed on the inner surface of cathode coatings 192C, PELs 192C need not be permeable to oxidant. PELs 192C may be permeable to protons or other ions. For example, PELs 192C may include ion conducting pathways. In some example embodiments, PELs 192C may include ion conducting materials, such as ionomers (e.g. perfluorosulfonic acid, or a copolymer of styrene and divinylbenzene).

Fuel cell layer 190 has cathode PELs and anode PELs that are different from each other and have different arrangements with respect to the corresponding electrode coatings. In other embodiments, cathode PELs and anode PELs may be the same or may have the same arrangement with respect to the corresponding electrode coatings.

Each of fuel cell layers 150, 160 and 170, shown in Figures 4A, 4B and 4C respectively, have cathode PELs and anode PELs that are in the same arrangement with respect to the corresponding electrode coating. However, it is to be understood that cathode PELs and anode PELs may have different arrangements with respect to the corresponding electrode coatings. It is also to be understood that the cathode PELs and anode PELs of a fuel cell layer may be the same or different with respect to composition, properties, dimensions and function. The cathode PELs within a fuel cell layer may be all the same or they may be different. The anode PELs within a fuel cell layer may be all the same or they may be different. Fuel cell layers may have both cathode PELs and anode PELS; only cathode PELs; or, only anode PELs.

In the embodiments shown, PELs are continuous and extend substantially over the surface of the electrode coating or the ion conducting component. However, in other embodiments, PELs may be spatially discontinuous. For example, PELs may have openings or slits or other discontinuities, or may have a fingered or serpentine pattern. Such discontinuities or patterns may allow for improved mass transport of reactant, fuel or protons to the electrode coating or improved removal of water from an electrode coating. In some embodiments, the PELs may extend only partially across the layer and partially or fully along each unit cell.

PELs may be applied to a variety of conventional and non-conventional fuel cell layers. For example, PELs may be applied to prior art electrochemical cells, such as those described in United States patent No. 5,989,741 entitled ELECTROCHEMICAL CELL SYSTEM WITH SIDE-BY-SIDE ARRANGEMENT OF CELLS, and United States patent No. 5,861,221 entitled BATTERY SHAPED AS A MEMBRANE STRIP CONTAINING SEVERAL CELLS.

PELs may be bonded or adhered to the fuel cell layer, the electron conducting components, the ion conducting components, or a combination of these. Accordingly, in some embodiments, fuel cell layers having PELs may have reduced contact resistance between the PEL and the electrode coatings or the electron conducting components with minimal or no additional or external compressive force required In some examples, the PEL may provide additional structural support and robustness to the fuel cell layer, for example, by reducing membrane deformation, catalyst cracking, or both.

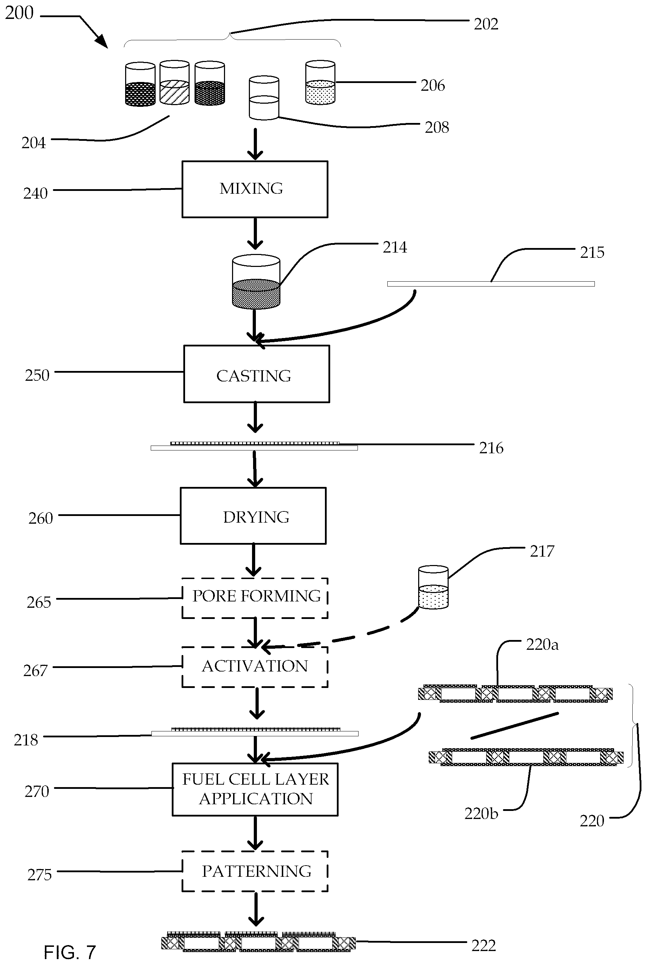

Figure 7 is a block process diagram of one possible method of preparing a fuel cell layer having PELs. In method 200, slurry components 202 may be subjected to a mixing stage 240 to yield a slurry 214. Slurry 214 may be subjected to a casting stage 250 to yield a wet film 216. Wet film 216 may be subjected to a drying stage 260; optionally, a pore forming stage 265; and optionally, an activating stage 267; to yield a PEL film 218. PEL film 218, together with a fuel cell layer 220, may be subjected to a fuel cell application stage 270 and optionally, a gapping stage 275 to yield a fuel cell layer including PELs 222.

In mixing stage 240, slurry components 202 may be combined and mixed. Slurry components 202 may include one or more electrically conductive materials 204, one or more binders 206 and one or more solvents 208. Electrically conductive materials 204 may include particles, for example, fragments or fibers. Electrically conductive materials may include particles that are anisotropic. A PEL including such electrically conductive material(s) may exhibit electrical anisotropy.

Slurry components 202 may include an electrically conductive material that acts as a filler or affects the rheology of slurry 214, for example, by imparting shear thinning properties. Slurry components 202 may include an electrically conductive material that affects the microstructure of the PEL, for example, by creating pores or micropores or linking the particles of other electrically conductive materials. Electrically conductive materials 204 may include particles (e.g. fragments) having an average diameter or size that is optimized to produce a desired micropore structure in the PEL. In an example embodiment, particles are large enough to create sufficient porosity in PEL film 218 but small enough to enable slurry 214 to be easily cast. In a particular example embodiment, electrically conductive materials 204 include one or more of carbon fibers, carbon black and graphite.

Slurry components 202 may include a binder 206 for promoting adhesion and/or contact of the electrically conductive materials. Slurry components 202 may include a binder that imparts elasticity or ductility in the PEL. Slurry components 202 may include a binder that is corrosion-resistant. In an example embodiment, slurry components 202 include a ratio of binder 206 to electrically conductive materials 204 that is high enough so that the particles of electrically conductive materials 204 are held together, but low enough so that PEL film 218 has sufficient porosity and conductivity. In a particular example embodiment, scurry components 202 include PVDF. Slurry components 202 may include a solvent 208 that dissolves the binder.

Slurry components 202 may optionally, include a pore former. Slurry components 202 may include a material that may be removed, for example, by dissolving, evaporation or burning. For example, slurry components 202 may include one or more pore formers such as salts, waxes and other fugitive materials.

Slurry components 202 may be mixed by a variety of means, such as agitation, stirring, shaking or spinning to produce slurry 214. Slurry 214 may have a variety of properties. Slurry 214 may have properties that are adapted to the type of coating or printing method used in casting stage 250. For example, scurry 214 may have properties that allow it to be drawn. In a particular example embodiment, slurry 214 has a solids content and rheology that allows it to be cast by drawing a doctor blade across a surface.

In casting stage 250, slurry 240 may be applied to a transfer film 215 to yield a wet PEL film 216. Transfer film 215 may include a material that is chemically inert, is temperature resistant or is deformable. In some example embodiments, transfer film 215 may include polytetrafluoroethylene (PTFE). Slurry 214 may be applied or cast using a variety of different methods. For example, slurry 214 may be cast using a method that applies a shear stress to slurry 214. In an example embodiment, scurry 214 is cast by drawing it across a surface. However, scurry 214 may alternatively be applied using other types of film casting (e.g. tape casting), screen-printing, or other conventional coating or printing methods.

In some embodiments, casting stage 250 yields a wet PEL film 216 that is morphologically anisotropic - e.g. a wet film having particles of an anisotropic electrically conductive material oriented predominantly in one direction. In a particular example embodiment, casting stage 250 yields a wet PEL film 216 having particles of an electrically conductive material oriented predominantly in a direction that is in the plane of wet PEL film 216.

In drying stage 260, solvent is allowed to evaporate to form a PEL film 218 that is substantially free of solvent. Wet PEL film 216 may be dried at a temperature and pressure and for a period of time. In an example embodiment, wet PEL film 216 may be dried at a temperature that is below the glass transition temperature or melting temperature of the binder. In an example embodiment, wet PEL film 216 is dried at a temperature and pressure that enable it to dry quickly, so as to prevent the migration of particles of electrically conductive material, but not so quickly that the evaporating solvent disrupts the micropore structure. In a particular example embodiment, wet PEL film 216 may be heated at a temperature in the range of about 80 °C to about 120 °C, at a pressure that is less than about 1 atm. for a period of about 20 to about 40 minutes.

In fuel cell application stage 270, PEL film 218 may be applied to a fuel cell layer 220. Fuel cell layer 220 may be a planar fuel cell. Fuel cell layer may be a completed fuel cell layer 220a having gaps or dielectric regions between individual electrode coatings or it may be an uncompleted fuel cell layer 220b having no gaps or dielectric regions in between individual electrode coatings.

In an example fuel cell application stage 270, PEL film 218 may be placed on or under a fuel cell layer 220, and PEL film 218 and fuel cell layer 220 may be heated at a temperature and subjected to a pressure for a period of time. PEL film 218 and fuel cell layer 220 may, for example, be heated at a temperature that is above the glass transition temperature of the ion conducting components in the fuel cell layer and below the temperature at which ion conducting components degrade, or a temperature that is slightly above the glass transition temperature of binder 206. PEL film 218 may be subjected to a pressure that is sufficient to place PEL film 218 and the electrode coatings of fuel cell layer 220 in intimate contact. In an example embodiment, PEL film 218 and fuel cell layer 220 may be heated at a temperature in the range of about 110 °C to about 150 °C and subjected to a pressure in the range of about 25 psi to about 200 psi for a period of time below about 10 minutes.

In some embodiments, PEL film 218 may be applied to a fuel cell layer 220 having electrode coatings that are not flat. For example, PEL film 218 may be applied to an asymmetric fuel cell layer, or an undulating or irregular fuel cell layer. For example, a PEL film may be bonded to a fuel layer having concave or trough-shaped anode coatings, by disposing a deformable material (e.g. a sponge, such as an open-cell sponge) on the outside of PEL film to create close contact between the PELs and anode coatings while conserving the surface shape of the anode coatings. In such embodiments, the fuel cell layer may further have a support structure bonded to the fuel cell layer and/or the PEL to provide additional support. Such support structures may be bonded to the anode side of the layer, the cathode side of the layer, or both. For example, the support structure may include a dimensionally stable porous material, which may be bonded to the current collectors of the fuel cell layer. Such support structures may provide additional compressive or bonding force to enhance the contact between the PEL and the electrode coatings.

Optionally, the bonded PEL film and fuel cell layer may be subjected to a patterning stage 275 to yield a fuel cell layer having PELs 222. In patterning stage 275, discontinuities may be created between individual PELs and optionally, individual electrode coatings. Such discontinuities may electrically insulate adjacent electrochemical cells. In some embodiments, discontinuities may be pre-patterned as gaps or dielectric regions on wet PEL film 216 during coating stage 250 or may be formed after coating stage 250. In some embodiments, discontinuities may be formed as gaps or dielectric regions on dry PEL film 218 prior to fuel cell layer application stage 270.

If slurry components 202 include a pore former, method 200 may include optional pore forming stage 265. In pore forming stage 265, pore formers may be removed, for example, by dissolving in a solvent or evaporating. Pore forming stage 265, if present, may be performed before, during or after drying stage 260.

In some embodiments, method 200 includes optional activation stage 267. In optional activation stage 267, wet PEL film 216, PEL film 218 or fuel cell layer 220 may be subjected to activation or priming. Activation may include applying an intermediary 217. Intermediary 217 may, for example, improve bonding or adhesion between PEL film 218 and the electrode coatings of fuel cell layer 220. Intermediary 217 may include a material that is present in PEL film 218 or electrode coatings of fuel cell layer 220, for example, binder 206, a catalyst, an ionomer, or an electrically conductive material 204. In other embodiments, optional activation stage may include other methods of activating wet PEL film 216, PEL film 218 or fuel cell layer 220. Activation stage, if present, may be performed before, during or after drying stage 260 and before, during or after optional pore forming stage 265, if present.

Method 200 or any of its stages may be repeated, depending on whether it is desirable to have a fuel cell layer with both cathode and anode PELs or only one of either cathode PELs or anode PELs.

### Examples

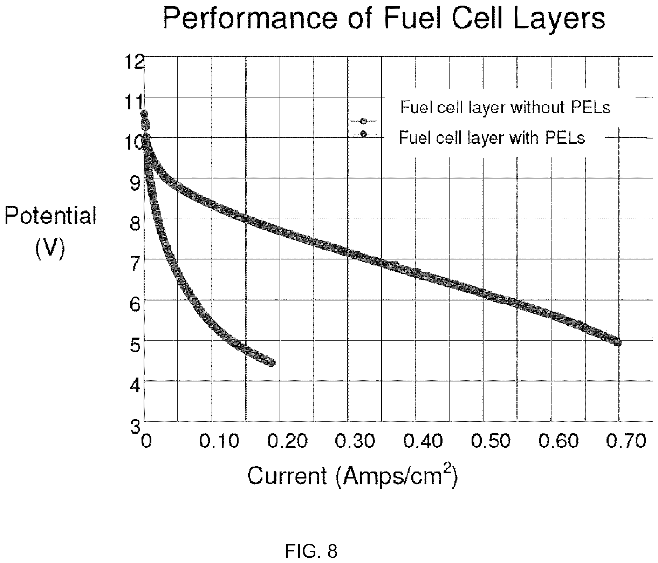

In an example embodiment, PEL films prepared according to method 200 were bonded to a fuel cell layer similar to the example planar fuel cell layer of Figure 2B. Figure 8 illustrates example performance data of such a fuel cell layer with performance enhancing layers compared with the performance of a fuel cell layer without performance enhancing layers. As can be seen, the performance of the fuel cell layer with PELs is significantly greater than the performance of the fuel cell layer without PELs.

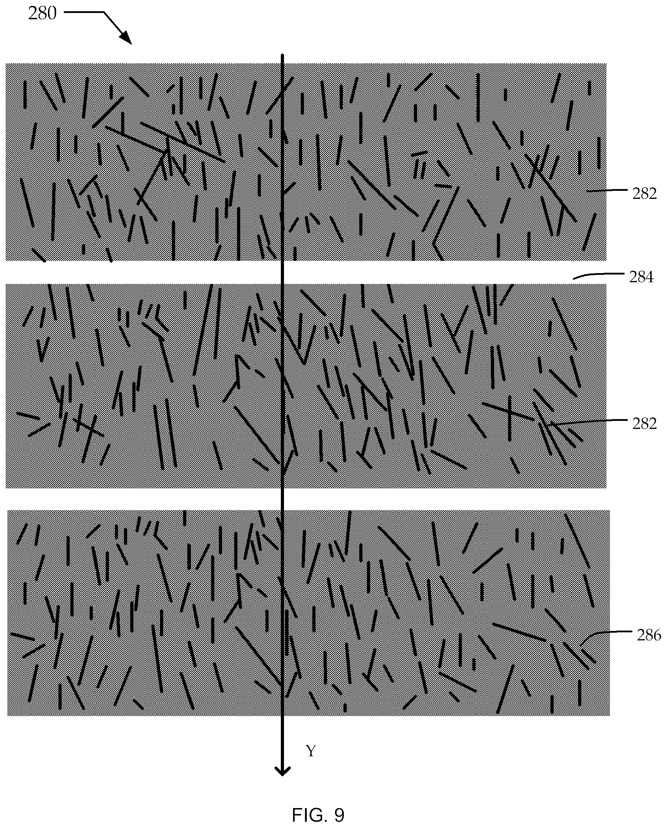

Figure 9 is a schematic top view of a fuel cell layer having PELs prepared according to method 200, with a PEL film prepared by drawing a slurry including fibers 286 to align such fibers with the Y direction shown in Figure 9. In the illustrated embodiment, the predominant direction of orientation of fibers 286 is in a direction that is in the plane of PELs 282 and extends from one side of each unit fuel cell to the opposite side (shown as the Y direction in the Figure).

Resistivity measurements were made on a PEL film prepared according to the above example embodiment. From these measurements, conductivity was calculated. Three coupons, each having dimensions of 2.54 cm by 5.08 cm (1 inch by 2 inches), were cut from the PEL film. Each coupon had a different orientation with respect to the direction of pull (e.g. the direction of applied shear stress): (1) parallel to the direction of pull; (2) 45° to the direction of pull; and (3) 90° to the direction of pull.

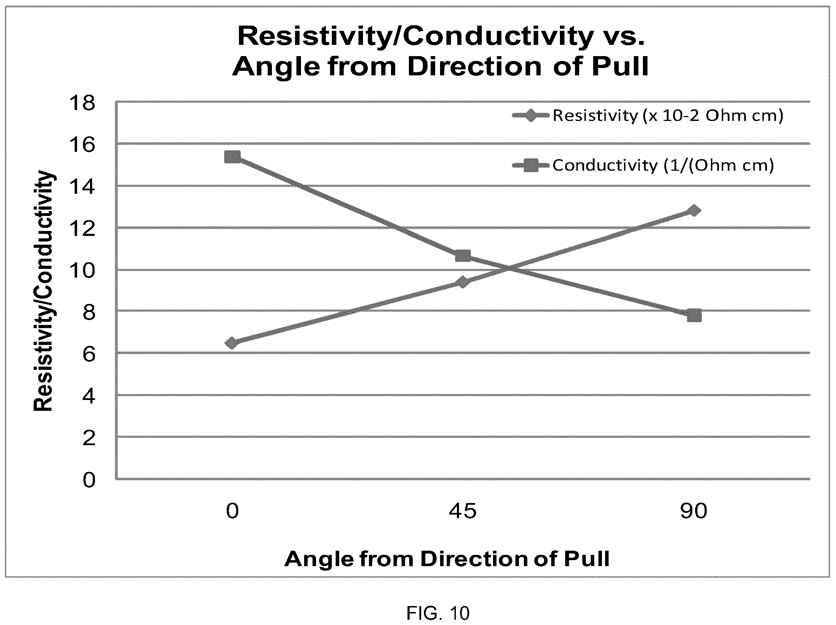

The in-plane resistivity of each of the coupons was measured by applying a voltage across two arms held in contact with the coupon and measuring the resulting current. Table 1 and Figure 10 each show the resistivity and conductivity of the coupons.

**Table 1: Resistivity and Conductivity of a PEL Film as a function of Angle from Direction of Pull**

| Angle (°) | Resistivity (x 10⁻² Ω·cm) | Conductivity (Ω·cm)⁻¹ |
|---|---|---|
| 0 | 6.5 | 15.4 |
| 45 | 9.4 | 10.6 |
| 90 | 12.8 | 7.8 |

As can be seen, as the angle from the direction of pull or draw (e.g. the angle from the direction of the applied shear stress) is increased, the resistivity of the PEL film increases and the conductivity decreases. Accordingly, a PEL film having anisotropic electrical properties may be prepared. A PEL film may be applied to a fuel cell layer in a preferred orientation to form PELs having high conductivity in a pre-determined direction. For example, a PEL film may be applied to a fuel cell layer by orienting it such that the direction of applied shear stress is orthogonal to the length of the individual unit fuel cells.

Method 200 is one example of a method of preparing a fuel cell layer having PELs. In another embodiment, a fuel cell layer having PELs disposed on the inner side of anode coatings or cathode coatings may be prepared by: bonding a PEL film with a composite; applying electrode coatings to the outer side of the PEL film; optionally, bonding the composite, PEL film and electrode coatings; and optionally, gapping the PEL film or electrode coatings.

A further embodiment includes a fuel cell layer having PELs be prepared by: applying electrode coatings directly on the PEL film; bonding the PEL film and electrode coatings with the fuel cell layer; and optionally, gapping the PEL film or electrode coatings.

In yet another embodiment, a PEL film may be prepared by: mixing a binder and optionally, and electrically conductive material to yield a scurry; casting the scurry into an electrically conductive material including anisotropic particles, to form a wet PEL film; and, drying the wet PEL film to yield a PEL film.

### Additional Embodiments

The present invention provides for the following exemplary embodiments, the numbering of which does not necessarily correlate with the numbering of the embodiments described in the Figures:

Embodiment 1 provides a performance enhancing layer for a fuel cell, including: one or more electrically conductive materials, at least one of the electrically conductive materials including particles which are morphologically anisotropic and oriented to impart anisotropic conductivity in the layer; and a binder, wherein the binder positions the particles in contact with each other.

Embodiment 2 provides the performance enhancing layer of embodiment 1, wherein the particles of at least one of the electrically conductive materials are oriented to impart in the layer conductivity that is greater in a first direction that is in the plane of the layer than a second direction that is perpendicular to the plane of the layer.

Embodiment 3 provides the performance enhancing layer of any one of embodiments 1-2, wherein the particles of at least one of the electrically conductive materials are oriented to impart in the layer conductivity that is greater in a first direction that is in the plane of the layer than a third direction that is in the plane of the layer.

Embodiment 4 provides the performance enhancing layer of any one of embodiments 1-3, wherein the particles are oriented by applying a shear stress in the first direction.

Embodiment 5 provides the performance enhancing layer of any one of embodiments 1-4, wherein the electrically conductive materials include carbon.

Embodiment 6 provides the performance enhancing layer of any one of embodiments 1-5, wherein the electrically conductive materials include carbon fibers, carbon black, graphite, or a combination thereof.

Embodiment 7 provides the performance enhancing layer of any one of embodiments 1-6, wherein the anisotropic particles are carbon fibers.

Embodiment 8 provides the performance enhancing layer of any one of embodiments 1-7, wherein the electrically conductive materials include carbon black.

Embodiment 9 provides the performance enhancing layer of any one of embodiments 1-8, wherein the electrically conductive materials include graphite.

Embodiment 10 provides the performance enhancing layer of any one of embodiments 1-9, wherein the binder includes polyvinylidene fluoride.

Embodiment 11 provides the performance enhancing layer of any one of embodiments 1-10, wherein the binder imparts in the layer elasticity, plasticity, or both.

Embodiment 12 provides the performance enhancing layer of any one of embodiments 1-11, wherein the layer is porous and allows for the mass transport of fluid from one side of the layer to the other.

Embodiment 13 provides the performance enhancing layer of any one of embodiments 1-12, wherein the layer has a thickness of less than 1 mm.

Embodiment 14 provides the performance enhancing layer of any one of embodiments 1-13, wherein the layer has a thickness in the range of about 50µm to about 200µm.

Embodiment 15 provides the performance enhancing layer of any one of embodiments 1-14, wherein the layer is permeable to the flow of ions.

Embodiment 16 provides the performance enhancing layer of any one of embodiments 1-15, further including two or more electrode coatings in contact with the binder.

Embodiment 17 provides a method of making a performance enhancing layers for a fuel cell layer having electrode coatings, the method including: mixing one or more electrically conductive materials, a binder and a solvent, sufficient to produce a slurry; casting the slurry, sufficient to produce a wet film; drying the wet film, sufficient to produce a film; and bonding the film to a fuel cell layer.

Embodiment 18 provides the method of embodiment 17, including patterning the performance enhancing layer, the electrode coatings, the fuel cell layer having performance enhancing layers, or a combination thereof.

Embodiment 19 provides the method of any one of embodiments 17-19, wherein the slurry has a solids content and rheology that allow it to be cast.

Embodiment 20 provides the method of any one of embodiments 17-19, wherein casting includes casting the slurry on a transfer film.

Embodiment 21 provides the method of any one of embodiments 17-20, including activating the film to improve adhesion with a layer of the electrode coatings.

Embodiment 22 provides the method of embodiment 21, wherein activating includes applying a material that promotes adhesion with the electrode coatings.

Embodiment 23 provides a fuel cell layer, including: one or more fuel cells, disposed adjacently so as to form a substantially planar layer; the one or more fuel cells including: a composite including an ion conducting component and two or more electron conducting components; two electrode coatings that are each in ionic contact with the ion conducting component and in electrical contact with at least one of the electron conducting components, each electrode coating including an inner surface and an outer surface; and, a performance enhancing layer disposed in contact or in close proximity to a surface of one of the electrode coatings, wherein the layer provides an electrically conductive pathway to or from the associated electron conducting component.

Embodiment 24 provides the fuel cell layer of embodiment 23, wherein the performance enhancing layer includes at least one electrically conductive material and a binder.

Embodiment 25 provides the fuel cell layer of any one of embodiments 23-24, wherein one of the electrically conductive materials includes particles having anisotropic morphology.

Embodiment 26 provides the fuel cell layer of any one of embodiments 23-25, wherein the particles are oriented to impart in the layer anisotropic conductivity.

Embodiment 27 provides the fuel cell layer of any one of embodiments 23-26, wherein the performance enhancing layer is disposed adjacent to the inner surface of the electrode coating.

Embodiment 28 provides the fuel cell layer of any one of embodiments 23-27, wherein the performance enhancing layer is disposed adjacent to the outer surface of the electrode coating.

Embodiment 29 provides the fuel cell layer of any one of embodiments 23-28, wherein the performance enhancing layer provides structural support for the fuel cell layer.

Embodiment 30 provides the fuel cell layer of any one of embodiments 23-29, wherein the performance enhancing layer reduces the deformability of the fuel cell layer.

The above description is intended to be illustrative, and not restrictive. Other embodiments can be used, such as by one of ordinary skill in the art upon reviewing the above description. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the invention should be determined with reference to the appended claims, along with the full scope of equivalents to which such claims are entitled.

## Claims

1. A fuel cell layer (150), comprising:
one or more fuel cells (140), disposed adjacently so as to form a substantially planar layer, the one or more fuel cells including:
a composite including an ion conducting component (118) and two or more electron conducting components (112) disposed adjacently;
anode and cathode electrode catalyst coatings (116A, 116C) that are each in ionic contact with the ion conducting component and in electrical contact with at least one of the electron conducting components, each electrode catalyst coating including an inner surface and an outer surface;
a performance enhancing layer (152A, 152C) comprising one or more electrically conductive materials, at least one of the electrically conductive materials comprising particles which are morphologically anisotropic and oriented to impart in the layer an anisotropic conductivity that is greater in a first direction that is in the plane of the layer than a second direction that is perpendicular to the plane of the layer, **characterized in that** the performance enhancing layer is disposed in contact with an inner or outer surface of one of the electrode catalyst coatings, wherein the performance enhancing layer provides an electrically conductive pathway to or from the associated electron conducting component.

2. The fuel cell layer of claim 2, comprising a support structure that comprises a dimensionally stable porous material, wherein the support structure contacts the performance enhancing layer

3. The fuel cell layer (150) of claim 1 or 2, wherein the particles of at least one of the electrically conductive materials are oriented to impart in the layer (152A, 152C) conductivity that is greater in a first direction that is in the plane of the layer than a third direction that is in the plane of the layer.

4. The fuel cell layer (150) of claim 3, wherein the particles are oriented by applying a shear stress in the first direction.

5. The fuel cell layer (150) of any one of claims 1-4, wherein the electrically conductive materials comprise carbon fibers, carbon black, graphite, or a combination thereof.

6. The fuel cell layer (150) of any one of claims 1-5, wherein the layer (152A, 152C) is porous and allows for the mass transport of fluid from one side of the layer to the other.

7. The fuel cell layer (150) of claim 6, wherein the electrically conductive materials comprise carbon black.

8. The fuel cell layer (150) of claim 1, wherein the performance enhancing layer (152A, 152C) comprises at least one electrically conductive material and a binder.

9. The fuel cell layer (150) of any one of claims 8, wherein the binder imparts in the layer elasticity, plasticity, or both.

10. The fuel cell layer (150) of claim 8, wherein at least one of the electrically conductive materials comprises particles having anisotropic morphology.

11. The fuel cell layer (150) of claim 10, wherein the particles are oriented to impart in the layer (152A, 152C) anisotropic conductivity.

12. The fuel cell layer (150) of any one of claims 9-11, wherein the performance enhancing layer (152A, 152C) provides structural support for the fuel cell layer.

13. A method (200) of making a fuel cell layer (222) having a performance enhancing layer according to claim 1, the method comprising:
Mixing (240) one or more electrically conductive materials, a binder and a solvent, sufficient to produce a slurry, at least one of the electrically conductive materials comprising particles which are morphologically anisotropic;
Casting (250) the slurry, to produce a wet film layer comprising the morphologically anisotropic particles, wherein the anisotropic particles are orientated in the wet film layer to impart anisotropic conductivity that is greater in a first direction that is in the plane of the layer than a second direction that is perpendicular to the plane of the layer;
drying (260) the wet film, to produce a film (218); and
bonding (270) the film to a fuel cell layer having electrode catalyst coatings.

14. The method of claim 13, wherein the film (218) contacts a support structure comprising a dimensionally stable porous material.

15. The method of claim 13, comprising patterning (275) the performance enhancing layer, the electrode coatings, the fuel cell layer having performance enhancing layers, or a combination thereof.

## Patentansprüche

1. Eine Brennstoffzellenschicht (150), umfassend:
Eine oder mehrere Brennstoffzellen (140), die aneinander angrenzend angeordnet sind, um eine im Wesentlichen ebenflächige Schicht zu bilden, wobei die eine oder mehrere Brennstoffzelle(n) einschließen:
Einen Verbund, der eine Ionen leitende Komponente (118) und zwei oder mehrere Elektronen leitende Komponenten (112) einschließt, die angrenzend angeordnet sind;
Katalysatorbeschichtungen (116A, 116C) für Anoden- und Kathodenelektroden, die in ionischem Kontakt mit den Ionen leitenden Komponente und in elektrischem Kontakt mit mindestens einer der Elektronen leitenden Komponenten sind, wobei jeder Elektrodenkatalysator eine innere Oberfläche und eine äußere Oberfläche einschließt;
eine leistungsverstärkende Schicht (152A, 152C), die eine oder mehrere elektrisch leitfähige Materialien umfasst, wobei mindestens eins der elektrisch leitfähigen Materialien Partikel umfasst, die morphologisch anisotrop und orientiert sind, der Schicht eine anisotrope Leitfähigkeit zu verleihen, die in einer ersten in der Ebene der Schicht liegenden Richtung größer als in einer zweiten Richtung ist, die senkrecht zur Ebene der Schicht ist, **dadurch gekennzeichnet, dass** die leistungsverstärkende Schicht in Kontakt mit einer inneren oder äußeren Oberfläche einer der Elektroden-Katalysatorbeschichtungen angeordnet ist, wobei die leistungsverstärkende Schicht einen elektrisch leitfähigen Pfad zu oder von der zugehörigen Elektronen leitenden Komponente bereitstellt.

2. Die Brennstoffzellenschicht nach Anspruch 2, die eine Trägerstruktur umfasst, die ein formstabiles poröses Material umfasst, wobei die Trägerstruktur die leistungsverstärkende Schicht kontaktiert.

3. Die Brennstoffzellenschicht (150) nach Anspruch 1 oder 2, wobei die Partikel von mindestens einem der elektrisch leitfähigen Materialien orientiert sind, um der Schicht (152A, 152C) Leitfähigkeit zu verleihen, die in einer ersten in der Ebene der Schicht liegenden Richtung größer als in einer dritten Richtung ist, die in der Ebene der Schicht liegt.

4. Die Brennstoffzelle (150) nach Anspruch 3, wobei die Partikel durch Anwenden einer Scherspannung in der ersten Richtung orientiert werden.

5. Die Brennstoffzellenschicht (150) nach einem der Ansprüche 1-4, wobei die elektrisch leitfähigen Materialien Kohlenstofffasern, Kohleschwarz, Grafit oder eine Kombination davon umfassen.

6. Die Brennstoffzellenschicht (150) nach einem der Ansprüche 1-5, wobei die Schicht (152A, 152C) porös ist und Massentransport von Fluid von einer Seite der Schicht zur anderen berücksichtigt.

7. Die Brennstoffzellenschicht (150) nach Anspruch 6, wobei die elektrisch leitfähigen Materialien Kohleschwarz umfassen.

8. Die Brennstoffzellenschicht (150) nach Anspruch 1, wobei die leistungsverstärkende Schicht (152A, 152C) mindestens ein elektrisch leitfähiges Material und ein Bindemittel umfasst.

9. Die Brennstoffzellenschicht (150) nach einem der Ansprüche 8, wobei das Bindemittel der Schicht Elastizität, Plastizität oder beides verleiht.

10. Die Brennstoffzellenschicht (150) nach Anspruch 8, wobei mindestens eins der elektrisch leitfähigen Materialien Partikel mit anisotroper Morphologie umfasst.

11. Die Brennstoffzellenschicht (150) nach Anspruch 10, wobei die Partikel orientiert sind, um der Schicht (152A, 152C) anisotrope Leitfähigkeit zu verleihen.

12. Die Brennstoffzellenschicht (150) nach einem der Ansprüche 9-11, wobei die leistungsverstärkende Schicht (152A, 152C) strukturelle Unterstützung für die Brennstoffzellenschicht bereitstellt.

13. Ein Verfahren (200) zur Herstellung einer Brennstoffzellenschicht (222), die eine leistungsverstärkende Schicht gemäß Anspruch 1 aufweist, wobei das Verfahren umfasst:
Vermischen (240) einer oder mehrerer elektrisch leitfähiger Materialien, eines Bindemittels und eines Lösemittels, ausreichend, um eine Schlämme zu produzieren, wobei mindestens eines der elektrisch leitfähigen Materialien Partikel umfasst, die morphologisch anisotrop sind.
Gießen (250) der Schlämme, um eine Nassfilmschicht zu produzieren, die morphologisch anisotrope Partikel umfasst, wobei die anisotropen Partikel in der Nassfilmschicht orientiert sind, um anisotrope Leitfähigkeit zu verleihen, die in einer ersten in der Ebene der Schicht liegenden Richtung größer als in einer zweiten Richtung ist, die senkrecht zur Ebene der Schicht liegt;
Trocknen (260) des Nassfilms, um einen Film (218) zu produzieren; und
Verbinden (270) des Films mit einer Brennstoffzellenschicht, die Elektroden-Katalysatorbeschichtungen aufweist.

14. Das Verfahren nach Anspruch 13, wobei der Film (218) einer Trägerstruktur kontaktiert, die formstabiles poröses Material umfasst.

15. Das Verfahren nach Anspruch 13, die Musterung (275) der leistungsverstärkenden Schicht, der Elektrodenbeschichtungen umfassend, wobei die Brennstoffzellenschicht leistungsverstärkende Schichten oder eine Kombination davon aufweist.

## Revendications

1. La présente invention concerne une couche de pile à combustible (150), comprenant :
une ou plusieurs piles à combustible (140) disposées de manière adjacente de façon à former une couche substantiellement planaire, la ou les piles à combustible comprenant :
un composite comprenant un composant conducteur d'ions (118) et deux ou plus composants conducteurs d'électrons (112) disposés de manière adjacente :
des revêtements anodiques et cathodiques catalyseurs d'électrode (116A, 116C) se trouvant chacun en contact ionique avec le composant conducteur d'ions et en contact électrique avec au moins l'un des composants conducteurs d'électrons, chaque revêtement catalyseur d'électrode comprenant une surface interne et une surface externe ;
une couche d'amélioration des performances (152A, 152C) comprenant un ou plusieurs matériaux conducteurs d'électricité, au moins l'un des matériaux conducteurs d'électricité comprenant des particules morphologiquement anisotropes et orientées de façon à conférer à la couche une conductivité anisotrope plus importante dans une première direction orientée dans le plan de la couche que dans une seconde direction orientée perpendiculairement au plan de la couche, **caractérisée en ce que** la couche d'amélioration des performances est disposée de façon à être en contact avec une surface interne ou externe de l'un des revêtements catalyseurs d'électrode, dans laquelle la couche d'amélioration des performances fournit un chemin électriquement conducteur vers et depuis le composant conducteur d'électrons associé.

2. La couche de pile à combustible selon la revendication 2, comprenant une structure de support comprenant elle-même un matériau poreux dimensionnellement stable, dans laquelle la structure de support entre en contact avec la couche d'amélioration des performances

3. La couche de pile à combustible (150) selon la revendication 1 ou 2, dans laquelle les particules d'au moins l'un des matériaux conducteurs d'électricité sont orientées de façon à produire dans la couche (152A, 152C) une conductivité plus importante dans une première direction orientée dans le plan de la couche que dans une troisième direction orientée dans le plan de la couche.

4. La couche de pile à combustible (150) selon la revendication 3, dans laquelle les particules sont orientées en appliquant une contrainte de cisaillement dans la première direction.

5. La couche de pile à combustible (150) selon l'une des revendications 1 à 4, dans laquelle les matériaux conducteurs d'électricité comprennent des fibres de carbone, du noir de carbone, du graphite ou une combinaison de ces derniers.

6. La couche de pile à combustible (150) selon l'une des revendications 1 à 5, dans laquelle la couche (152A, 152C) est poreuse et permet le transfert de masse d'un fluide d'un côté de la couche à l'autre.

7. La couche de pile à combustible (150) selon la revendication 6, dans laquelle les matériaux conducteurs d'électricité comprennent du noir de carbone.

8. La couche de pile à combustible (150) selon la revendication 1, dans laquelle la couche d'amélioration des performances (152A, 152C) comprend au moins un matériau conducteur d'électricité et un liant.

9. La couche de pile à combustible (150) selon l'une des revendications 8, dans laquelle le liant confère de l'élasticité, de la plasticité ou les deux à la couche.

10. La couche de pile à combustible (150) selon la revendication 8, dans laquelle au moins l'un des matériaux conducteurs d'électricité comprend des particules disposant d'une morphologie anisotrope.

11. La couche de pile à combustible (150) selon la revendication 10, dans laquelle les particules sont orientées de façon à conférer à la couche (152A, 152C) une conductivité anisotrope.

12. La couche de pile à combustible (150) selon l'une des revendications 9 à 11, dans laquelle la couche d'amélioration des performances (152A, 152C) fournit un support structurel à la couche de pile à combustible.

13. Une méthode (200) de fabrication d'une couche de pile à combustible (222) disposant d'une couche d'amélioration des performances selon la revendication 1, la méthode comprenant :
le mélange (240) d'un ou plusieurs matériaux conducteurs d'électricité, d'un liant et d'un solvant en quantités suffisantes pour produire une pâte, au moins l'un des matériaux conducteurs d'électricité comprenant des particules morphologiquement anisotropes ;
l'application (250) de la pâte de façon à produire une pellicule humide comprenant les particules morphologiquement anisotropes, dans laquelle les particules anisotropes sont orientées dans la pellicule humide de façon à conférer une conductivité anisotrope plus importante dans une première direction orientée dans le plan de la couche que dans une seconde direction orientée perpendiculairement au plan de la couche ;
le séchage (260) de la pellicule humide, de façon à produire une pellicule (218) ; et
le collage (270) de la pellicule contre une pile à combustible disposant de revêtements catalyseurs d'électrode.

14. La méthode selon la revendication 13, dans laquelle la pellicule (218) entre en contact avec une structure de support comprenant un matériau poreux dimensionnellement stable.

15. La méthode selon la revendication 13, comprenant la structuration (275) de la couche d'amélioration des performances, des revêtements d'électrode, de la couche de pile à combustible munie de couches d'amélioration des performations ou d'une combinaison de ces derniers.
